# FASCICULE DE BREVET EUROPEEN

(11) **EP 3 508 093 B1**
(45) Date de publication et mention de la délivrance du brevet: **04.05.2022**
(21) Numéro de dépôt: 18211407.4
(22) Date de dépôt: 10.12.2018
(51) Int. Cl.: A47B 47/00

(54) **DISPOSITIF DEMONTABLE DE TRANSPORT DE MATERIEL**
DEMONTIERBARE VORRICHTUNG ZUM MATERIALTRANSPORT
REMOVABLE DEVICE FOR TRANSPORTING EQUIPMENT

(30) Priorité: 11.12.2017 FR 1761919
(43) Date de publication de la demande: 10.07.2019
(73) Titulaire: Rythmes & Sons, Société à Responsabilité Limitée, 67400 Illkirch-Graffenstaden (FR)
(72) Inventeur: WALTER, Claude, 67400 Illkirch Graffenstaden (FR)
(74) Mandataire: Cabinet Bleger-Rhein-Poupon

(56) Documents cités:
- EP-A1- 0 823 230
- GB-A- 2 129 903
- GB-A- 2 501 845
- US-A- 2 674 769
- US-A- 3 285 444
- US-A- 6 053 591
- US-A1- 2005 077 805
- US-B1- 6 929 268

## Description

La présente invention a trait à un dispositif démontable de transport de matériel.

Cette invention a trait au domaine de la fabrication des dispositifs destinés à assurer le transport de matériel fragile nécessitant un soin particulier pendant son transport, comme des instruments de musique et/ou des pièces détachées fragiles et/ou des œuvres d'art et/ou du matériel électronique fragile.

Ce dispositif de transport trouvera une application particulièrement appropriée comme caisse dite « navette » permettant, notamment, une rotation du matériel que contient un tel dispositif de transport, ceci tout en garantissant un niveau élevé de protection de ce matériel.

Un tel dispositif de transport adopte, plus particulièrement, la forme d'un flight case.

L'on connait, d'ores et déjà, de tels dispositifs de transport qui comportent, usuellement, un fond comportant, d'une part, une paroi inférieure comportant un cadre inférieur et une plaque inférieure rivetée sur ce cadre inférieur, d'autre part, des parois latérales comportant, chacune, un cadre latéral et une plaque latérale rivetée sur ce cadre latéral et, d'autre part encore, des parois longitudinales comportant, chacune, un cadre longitudinal et une plaque longitudinale rivetée sur ce cadre longitudinal. Ce dispositif de transport comporte, également, un couvercle, qui est destiné à refermer le fond, et qui peut, là encore, comporter des parois comportant chacune un cadre et une plaque rivetée sur un tel cadre. Ce dispositif de transport peut, encore, comporter des charnières pour monter ce couvercle de manière articulée sur ce fond.

Un tel dispositif de transport présente de nombreux inconvénients.

Ainsi, le fond de ce dispositif de transport (voire encore son couvercle) comporte des parois comportant, chacune, un cadre ainsi qu'une plaque rivetée sur un tel cadre. Il en découle qu'un tel fond (voire encore un tel couvercle) n'est aucunement démontable de sorte que, lorsque ce dispositif de transport voyage à vide, celui-ci monopolise inutilement un volume particulièrement important.

De plus, le fait que ce fond (voire ce couvercle) ne soit pas démontable empêche, en cas de dégradation ou de détérioration d'une paroi de ce fond (ou de ce couvercle), de procéder au remplacement de cette paroi ce qui conduit irrémédiablement à mettre l'ensemble du dispositif de transport au rebut, ceci sans possibilité de réparation.

Une autre caractéristique consiste en ce que le fond d'un tel dispositif de transport peut comporter plusieurs étages superposés de matériel. Une telle configuration ne permet pas d'accéder immédiatement au matériel stocké dans les étages les plus bas de ce fond, voire impose, pour y accéder, des manipulations délicates, longues et fastidieuses, ceci en fonction de la nature et/ou du poids du matériel. Le document US 3 285 444 A divulgue une poutre pour l'utilisation dans la fabrication de meubles.

La présente invention se veut de remédier aux inconvénients des dispositifs de transport de l'état de la technique.

A cet effet, l'invention concerne un dispositif démontable de transport de matériel comportant, d'une part, une paroi inférieure comportant un cadre inférieur, une plaque inférieure et des moyens de solidarisation réversible pour rendre ce cadre inférieur solidaire de manière réversible de cette plaque inférieure, d'autre part, une paroi supérieure comportant un cadre supérieur, une plaque supérieure et des moyens de solidarisation réversible pour rendre ce cadre supérieur solidaire de manière réversible de cette plaque supérieure, d'autre part encore, des parois latérales comportant, chacune, un cadre latéral, une plaque latérale et des moyens de solidarisation réversible pour rendre un tel cadre latéral solidaire de manière réversible d'une telle plaque latérale et, d'autre part aussi, des parois longitudinales comportant, chacune, un cadre longitudinal et dont l'une au moins comporte au moins une porte sectionnelle mobile entre une position de fermeture et une position d'ouverture du dispositif tandis que les moyens de solidarisation réversible comportent, d'une part, au moins un orifice traversant que comporte le cadre, selon le cas, inférieur, supérieur, latéral, d'autre part, au moins un insert taraudé que comporte la plaque, selon le cas, inférieure, supérieure, latérale, et, d'autre part encore, au moins une vis, qui traverse un tel orifice traversant, et qui coopère avec un tel insert taraudé.

Une autre caractéristique concerne le fait que le cadre inférieur et/ou le cadre supérieur et/ou les cadres latéraux et/ou les cadres longitudinaux comportent, chacun, une pluralité de profilés.

Encore une autre caractéristique concerne le fait qu'au moins une partie des profilés d'un tel cadre adopte la forme d'une cornière et comporte, d'une part, une première aile contre laquelle vient en applique la face d'une première plaque, d'autre part, une première butée contre laquelle vient en applique le chant de la première plaque, d'autre part encore, une deuxième aile contre laquelle vient en applique la face d'une deuxième plaque et, d'autre part aussi, une deuxième butée contre laquelle vient en applique le chant de la deuxième plaque.

Une caractéristique additionnelle concerne le fait que la première aile et/ou la deuxième aile, que comporte le ou les profilés que comporte ledit cadre, comporte ledit au moins un orifice traversant.

Encore une autre caractéristique concerne le fait que, d'une part, dans le ou les profilés, la première aile s'étend selon un premier plan tandis que la deuxième aile s'étend à partir de la première aile et selon un deuxième plan perpendiculaire au premier plan et, d'autre part, le ou les profilés comportent, chacun, au moins une nervure, qui s'étend à partir de la première aile et/ou à partir de la deuxième aile, et qui comporte la première butée et/ou la deuxième butée.

Une caractéristique additionnelle concerne le fait que la ou les portes sectionnelles comportent, chacune, d'une part, une section interne positionnée à l'intérieur du dispositif de transport et mobile à l'intérieur de ce dispositif de transport, d'autre part, une section intermédiaire mobile entre une position déployée à l'extérieur du dispositif de transport dans laquelle cette section intermédiaire forme un angle non nul avec la section interne et une position repliée à l'intérieur du dispositif de transport dans laquelle au moins une partie de cette section intermédiaire est rabattue par-dessus ou par-dessous au moins une partie de la section interne, d'autre part encore, des moyens d'articulation intermédiaire pour articuler la section intermédiaire par rapport à la section interne.

Encore une autre caractéristique concerne le fait que la ou les portes sectionnelles comportent, chacune, encore, d'autre part, une section distale mobile entre une position déployée à l'extérieur du dispositif de transport dans laquelle cette section distale s'étend selon un même plan que la section intermédiaire et une position repliée à l'intérieur du dispositif de transport dans laquelle cette section distale est rabattue par-dessus ou par-dessous cette section intermédiaire et, d'autre part, des moyens d'articulation distale pour articuler la section distale par rapport à la section intermédiaire.

Ainsi, le dispositif démontable de transport comporte des moyens de solidarisation réversible pour rendre un cadre solidaire de manière réversible d'une paroi. La présence de ces moyens de solidarisation permet, avantageusement, de démonter un tel dispositif de transport, notamment lorsque ce dispositif de transport est amené à voyager à vide. De plus, la présence de ces moyens de solidarisation permet, avantageusement et en cas de dégradation d'un cadre ou d'une plaque, de procéder à son démontage en vue de son remplacement.

De plus, les caractéristiques de ces moyens de solidarisation réversible permettent, avantageusement, de conférer au dispositif de transport une rigidité, une cohésion, une résistance à la déformation, et une résistance aux chocs améliorées par rapport aux dispositifs de transport de l'état de la technique.

D'autres buts et avantages de la présente invention apparaîtront au cours de la description qui va suivre se rapportant à des modes de réalisation qui ne sont donnés qu'à titre d'exemples indicatifs et non limitatifs.

La compréhension de cette description sera facilitée en se référant aux dessins joints en annexe et dans lesquels :
- la figure 1 est une vue schématisée et en perspective du dispositif de transport conforme à l'invention, ceci en position de fermeture de ce dispositif de transport ;

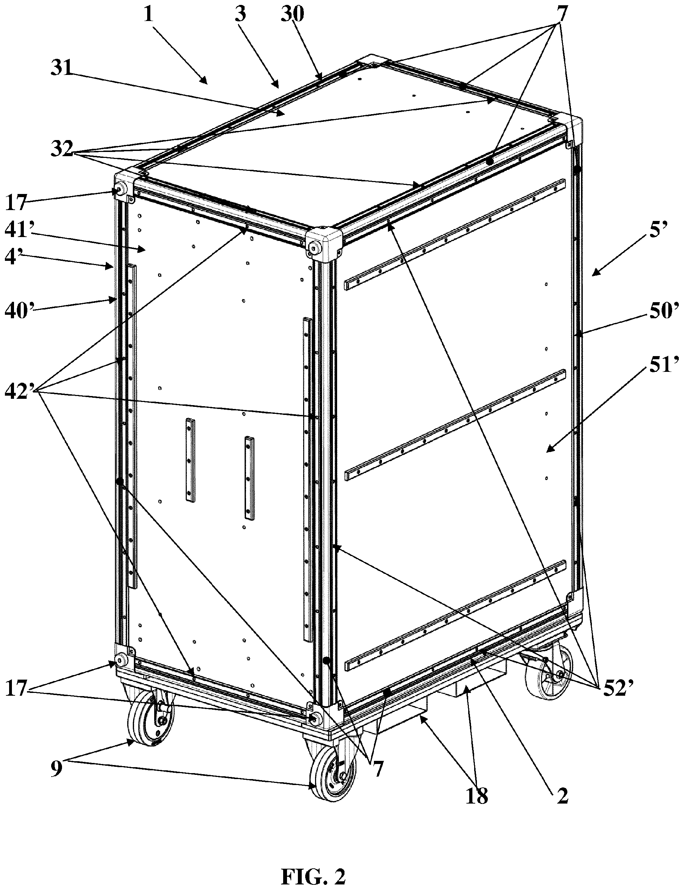

- la figure 2 est une vue schématisée, en perspective et de derrière du dispositif de transport selon l'invention illustré figure 1;
- la figure 3 est une vue similaire à la vue de la figure 1 et correspond au dispositif de transport selon l'invention illustré figures 1 et 2, ceci en position partielle d'ouverture de dispositif ;
- la figure 4 est une vue similaire aux vues des figures 1 et 3 et correspond au dispositif de transport selon l'invention illustré figures 1 et 3, ceci en position d'ouverture de dispositif ;
- la figure 5 est une vue schématisée et en détail des portes sectionnelles du dispositif de transport selon l'invention ;

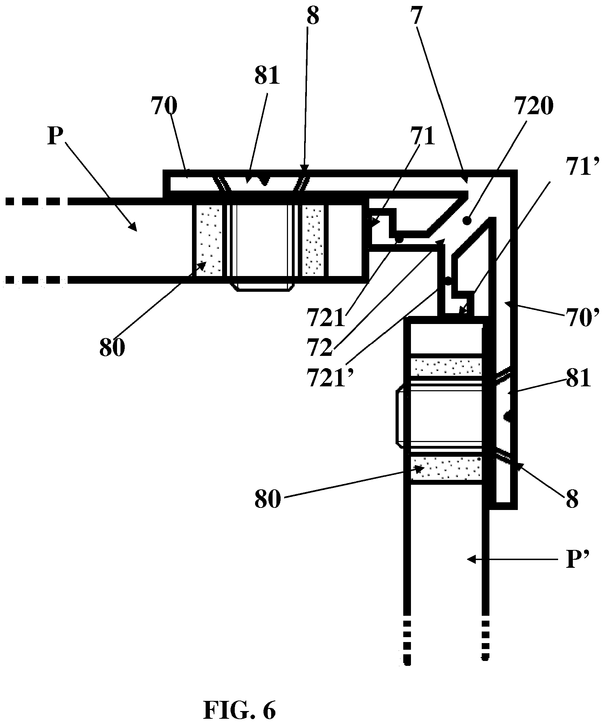

- la figure 6 est une vue schématisée et en détail des moyens de solidarisation réversible entre, d'une part, une plaque et un profilé que comporte un cadre et, d'autre part, une autre plaque et le même profilé que comporte un autre cadre.

La présente invention concerne le domaine de la fabrication des dispositifs destinés à assurer le transport de matériel fragile nécessitant un soin particulier pendant son transport, comme des instruments de musique et/ou des pièces détachées fragiles et/ou des œuvres d'art et/ou du matériel électronique fragile.

Un tel dispositif de transport 1 de matériel adopte, plus particulièrement, la forme d'un flight case.

Un tel dispositif de transport 1 est, plus particulièrement, de type démontable.

Ce dispositif de transport 1 comporte une paroi inférieure 2 comportant un cadre inférieur 20, une plaque inférieure 21 et des moyens de solidarisation réversible 22 pour rendre ce cadre inférieur 20 solidaire de manière réversible de cette plaque inférieure 21.

Ce dispositif de transport 1 comporte, également, une paroi supérieure 3 comportant un cadre supérieur 30, une plaque supérieure 31 et des moyens de solidarisation réversible 32 pour rendre ce cadre supérieur 30 solidaire de manière réversible de cette plaque supérieure 31.

Ce dispositif de transport 1 comporte, encore, des parois latérales (4 ; 4') comportant, chacune, un cadre latéral (40 ; 40'), une plaque latérale (41 ; 41') et des moyens de solidarisation réversible (42 ; 42') pour rendre un tel cadre latéral (40 ; 40') solidaire de manière réversible d'une telle plaque latérale (41 ; 41').

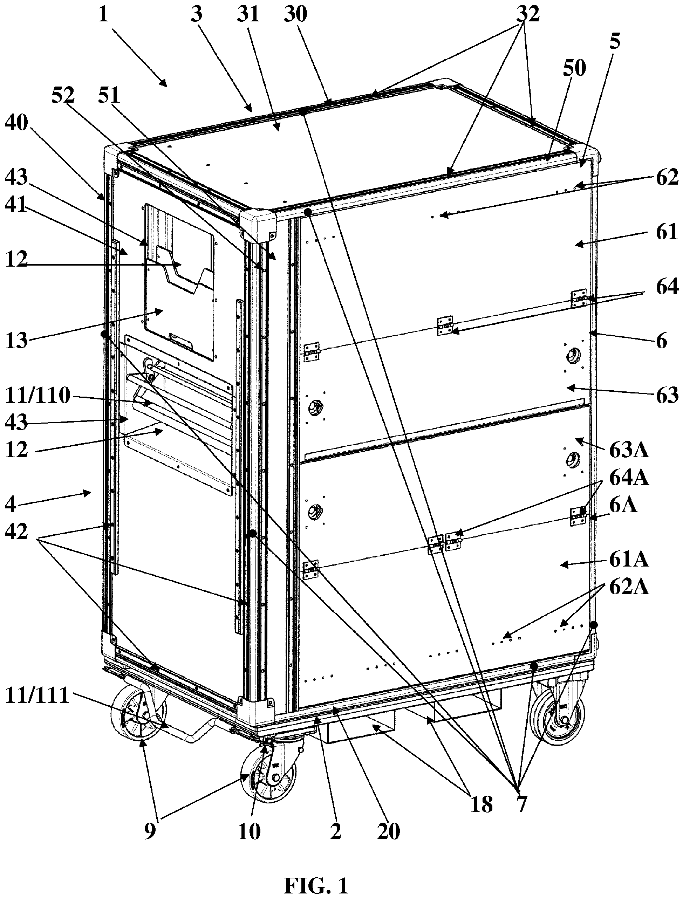

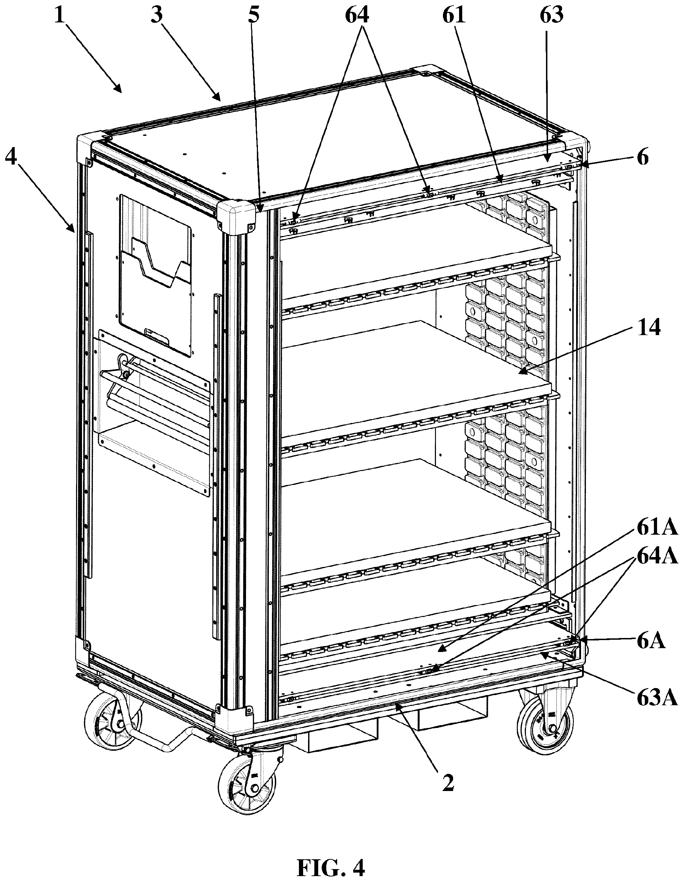

Finalement, ce dispositif de transport 1 comporte, aussi, des parois longitudinales (5 ; 5') comportant, chacune, un cadre longitudinal (50 ; 50') et dont l'une au moins 5 comporte au moins une porte sectionnelle (6 ; 6A) mobile entre une position de fermeture (figure 1) et une position d'ouverture (figure 4) du dispositif 1.

Un mode particulier de réalisation (non représenté) consiste en ce qu'un tel dispositif de transport 1 peut comporter des parois longitudinales (5 ; 5') comportant, chacune, un cadre longitudinal (50 ; 50') ainsi qu'au moins une porte sectionnelle mobile entre une position de fermeture et une position d'ouverture du dispositif 1.

Cependant, un mode de réalisation préféré de l'invention illustré sur les figures en annexe, consiste en ce que le dispositif de transport 1 comporte, d'une part, une paroi longitudinale 5 comportant un cadre longitudinal 50 ainsi qu'au moins une porte sectionnelle (6 ; 6A), de préférence deux portes sectionnelles (6 ; 6A) et, d'autre part, une autre paroi longitudinale 5' comportant un autre cadre longitudinal 50', une plaque longitudinale 51' et des moyens de solidarisation réversible 52' pour rendre un tel autre cadre longitudinal 50' solidaire de manière réversible d'une telle plaque longitudinale 51' .

Une autre caractéristique concerne le fait que la plaque inférieure 20 et/ou la plaque supérieure 31 et/ou le ou les plaques latérales (41 ; 41') et/ou la ou les plaques longitudinales (51 ; 51') sont constituées par un panneau en bois (plus particulièrement en bouleau) et/ou par un panneau en matériau contreplaqué et/ou par un panneau comportant une pluralité de couches, plus particulièrement 7 couches et/ou des couches croisées.

Tel que mentionné ci-dessus, la paroi inférieure 2 comporte le cadre inférieur 20, la paroi supérieure 3 comporte le cadre supérieur 30, les parois latérales (4 ; 4') comportent chacune un des cadres latéraux (40 ; 40'), et les parois longitudinales (5, 5') comportent chacune un des cadres longitudinaux (50 ; 50').

En fait, dans le dispositif de transport 1, le cadre inférieur 20 et/ou le cadre supérieur 30 et/ou les cadres latéraux (40 ; 40') et/ou les cadres longitudinaux (50 ; 50') comportent, chacun, une pluralité de profilés 7.

Un mode préféré de réalisation consiste en ce qu'un tel cadre (20 ; 30 ; 40, 40' ; 50, 50') est constitué par une pluralité de profilés 7, plus particulièrement par quatre profilés 7 comme visible sur les figures en annexe.

Un tel profilé 7 est, de préférence, réalisé en un matériau métallique, plus particulièrement de l'aluminium.

A ce propos, on observera qu'un tel profilé 7 peut, alors, être constitué par un profilé inférieur que comporte, d'une part, le cadre inférieur 20 et, d'autre part, l'un des cadres latéraux (40 ; 40') ou l'un des cadres longitudinaux (50 ; 50').

Un tel profilé 7 peut, également, être constitué par un profilé supérieur que comporte, d'une part, le cadre supérieur 30 et, d'autre part, l'un des cadres latéraux (40 ; 40') ou l'un des cadres longitudinaux (50 ; 50').

Un tel profilé 7 peut, aussi, être constitué par un profilé de coin que comporte, d'une part, l'un des cadres latéraux (40 ; 40') et, d'autre part, l'un des cadres longitudinaux (50 ; 50').

Ceci étant, le cadre inférieur 20 comporte (voire, et de préférence, est constitué par) une pluralité de profilés inférieurs, de préférence quatre profilés inférieurs. Le cadre supérieur 30 comporte (voire, et de préférence, est constitué par) une pluralité de profilés supérieurs, de préférence quatre profilés supérieurs. Les cadres latéraux (40 ; 40') comportent, chacun, (voire, et de préférence, sont constitués, chacun, par) une pluralité de profilés de coin (de préférence deux profilés de coin), un profilé supérieur et un profilé inférieur. Les cadres longitudinaux (50 ; 50') comportent, chacun, (voire, et de préférence, sont constitués, chacun, par) une pluralité de profilés de coin (de préférence deux profilés de coin), un profilé supérieur et un profilé inférieur.

Une autre caractéristique de l'invention concerne le fait qu'au moins une partie des profilés 7 que comporte un tel cadre (20 ; 30 ; 40 ; 40' ; 50 ; 50') adopte la forme d'une cornière et comporte, d'une part, une première aile 70 contre laquelle vient en applique la face d'une première plaque P, d'autre part, une première butée 71 contre laquelle vient en applique le chant de cette première plaque P, d'autre part encore, une deuxième aile 70' contre laquelle vient en applique la face d'une deuxième plaque P' et, d'autre part aussi, une deuxième butée 71' contre laquelle vient en applique le chant de cette deuxième plaque P'.

Ces caractéristiques permettent, avantageusement, un positionnement approprié d'une telle plaque (P ; P') par rapport à un tel profilé 7 et de contribuer à la rigidité du dispositif 1.

En fait, un mode préféré de réalisation consiste en ce que l'intégralité des profilés 7 qui constituent un tel cadre (20 ; 30 ; 40 ; 40'; 50 ; 50') adopte la forme d'une cornière et comporte, d'une part, une telle première aile 70 (contre laquelle vient en applique la face d'une telle première plaque P), d'autre part, une telle première butée 71 (contre laquelle vient en applique le chant de cette première plaque P), d'autre part encore, une telle deuxième aile 70' (contre laquelle vient en applique la face d'une telle deuxième plaque P') et, d'autre part aussi, une telle deuxième butée 71' (contre laquelle vient en applique le chant de cette deuxième plaque P').

En particulier et dans le cas d'un profilé inférieur, celui-ci peut comporter, d'une part, une aile inférieure contre laquelle vient en applique la face de la plaque inférieure 41, d'autre part, une butée inférieure contre laquelle vient en applique le chant de cette plaque inférieure 41, d'autre part encore, une aile latérale, contre laquelle vient en applique la face de l'une des plaques latérales (41 ; 41') et, d'autre part aussi, une butée latérale contre laquelle vient en applique le chant de cette plaque latérale (41 ; 41').

Dans un pareil cas, d'une part, la première aile 70 susmentionnée est constituée par ladite aile inférieure tandis la première butée 71 susmentionnée est constituée par la butée inférieure et que la première plaque P susmentionnée est constituée par la plaque inférieure 21 et, d'autre part, la deuxième aile 70' susmentionnée est constituée par ladite aile latérale tandis que la deuxième butée 71' susmentionnée est constituée par la butée latérale et que la deuxième plaque P' susmentionnée est constituée par l'une des plaques latérales (41 ; 41').

Un tel profilé inférieur peut, encore, comporter, d'une part, une aile inférieure contre laquelle vient en applique la face de la plaque inférieure 41, d'autre part, une butée inférieure contre laquelle vient en applique le chant de cette plaque inférieure 41, d'autre part encore, une aile longitudinale, contre laquelle vient en applique la face de l'une des plaques longitudinales (51 ; 51'), et, d'autre part aussi, une butée longitudinale contre laquelle vient en applique le chant de cette plaque longitudinale (51 ; 51').

Dans un pareil cas, d'une part et là encore, la première aile 70 susmentionnée est constituée par ladite aile inférieure tandis que la première butée 71 susmentionnée est constituée par la butée inférieure et que la première plaque P susmentionnée est constituée par la plaque inférieure 21 et, d'autre part, la deuxième aile 70' susmentionnée est constituée par ladite aile longitudinale, tandis que la deuxième butée 71' susmentionnée est constituée par la butée longitudinale, et que la deuxième plaque P' susmentionnée est constituée par l'une des plaques longitudinales (51 ; 51').

Dans le cas d'un profilé supérieur, celui-ci comporte, d'une part, une aile supérieure contre laquelle vient en applique la face de la plaque supérieure 31, d'autre part, une butée supérieure contre laquelle vient en applique le chant de cette plaque supérieure 31, d'autre part encore, une aile latérale, respectivement longitudinale, contre laquelle vient en applique la face de l'une des plaques latérales (41 ; 41'), respectivement la face de l'une des plaques longitudinales (51 ; 51'), et, d'autre part aussi, une butée latérale, respectivement longitudinale, contre laquelle vient en applique le chant de cette plaque latérale (41 ; 41'), respectivement le chant de cette plaque longitudinale (51 ; 51').

Dans un pareil cas, d'une part et là encore, la première aile 70 susmentionnée est constituée par ladite aile supérieure tandis que la première butée 71 susmentionnée est constituée par la butée supérieure et que la première plaque P susmentionnée est constituée par la plaque supérieure 31 et, d'autre part, la deuxième aile 70' susmentionnée est constituée par ladite aile latérale, respectivement longitudinale, tandis que la deuxième butée 71' susmentionnée est constituée par la butée latérale, respectivement longitudinale, et que la deuxième plaque P' susmentionnée est constituée par l'une des plaques latérales (41 ; 41'), respectivement par l'une des plaques longitudinales (51 ; 51').

Quant au profilé de coin celui-ci peut comporter, d'une part, une aile latérale contre laquelle vient en applique la face de l'une des plaques latérales (41 ; 41'), d'autre part, une butée latérale contre laquelle vient en applique le chant de cette plaque latérale (41 ; 41'), d'autre part encore, une aile longitudinale contre laquelle vient en applique la face de l'une des plaques longitudinales (51 ; 51') et, d'autre part aussi, une butée longitudinale contre laquelle vient en applique le chant de cette plaque longitudinale (51 ; 51').

Dans un pareil cas, d'une part, la première aile 70 susmentionnée est constituée par ladite aile latérale tandis que la première butée 71 susmentionnée est constituée par la butée latérale et que la première plaque P susmentionnée est constituée par l'une des plaques latérales (41 ; 41') et, d'autre part, la deuxième aile 70' susmentionnée est constituée par ladite aile longitudinale tandis que la deuxième butée 71' susmentionnée est constituée par la butée longitudinale et que la deuxième plaque P' susmentionnée est constituée par l'une des plaques longitudinales (51 ; 51').

Tel que mentionné ci-dessus, au moins une partie (voire, et de préférence, l'intégralité) des profilés 7 comporte une première aile 70 et une deuxième aile 70'.

A ce propos, on observera que, dans ce ou ces profilés 7, la première aile 70 s'étend selon un premier plan tandis que la deuxième aile 70' s'étend à partir de la première aile 70 et selon un deuxième plan perpendiculaire au premier plan. De plus, ce ou ces profilés 7 comportent, chacun, au moins une nervure 72, qui s'étend à partir de la première aile 70 et/ou à partir de la deuxième aile 70', et qui comporte la première butée 71 et/ou la deuxième butée 71'.

Un premier mode de réalisation non représenté consiste en ce qu'un tel profilé comporte, d'une part, une première nervure, qui s'étend à partir de la première aile (notamment de manière perpendiculaire), et qui comporte la première butée et, d'autre part, une deuxième nervure, qui s'étend à partir de la deuxième aile (notamment de manière perpendiculaire), et qui comporte la deuxième butée.

Cependant et selon un mode de réalisation préféré illustré figure 8, ce ou ces profilés 7 comportent, chacun, une nervure 72, qui s'étend à partir de la première aile 70 et à partir de la deuxième aile 70' (plus particulièrement à partir de la jonction entre cette première aile 70 et cette deuxième aile 70'), et qui comporte la première butée 71 ainsi que la deuxième butée 71'.

Une autre caractéristique concerne le fait que ladite au moins une nervure 72 comporte, d'une part, une portion proximale 720 qui s'étend à partir de la première aile 70 et/ou à partir de la deuxième aile 70' et, d'autre part, deux portions distales (721 ; 721'), qui s'étendent à partir de la portion proximale 720 en divergeant, et qui comportent, chacune, une extrémité libre dont l'une comporte la première butée 71 et dont l'autre comporte la deuxième butée 71'.

Un mode préféré de réalisation consiste en ce que ladite au moins une nervure 72 comporte une portion proximale 720 qui s'étend à partir de la première aile 70 et à partir de la deuxième aile 70' (plus particulièrement à partir de la jonction entre cette première aile 70 et cette deuxième aile 70'). Dans un pareil cas, ladite portion proximale 720 forme un angle de 45° avec la première aile 70 et/ou avec la deuxième aile 70'.

En ce qui concerne les portions distales (721 ; 721'), l'une 721 de ces portions distales (721 ; 721') est parallèle à la première aile 70 tandis que l'autre 721' de ces portions distales (721 ; 721') est parallèle à la deuxième aile 70'.

Tel que mentionné ci-dessus, le dispositif de transport 1 comporte, également, des moyens de solidarisation réversible (22; 32; 42, 42'; 52, 52') pour rendre le cadre (inférieur 20; supérieur 30; latéral 40, 40'; longitudinal 50, 50') solidaire de manière réversible de la paroi (inférieure 21; supérieure 31; latérale 41, 41'; longitudinale 51, 51').

De tels moyens de solidarisation réversible (22; 32; 42, 42'; 52, 52') comportent, d'une part, au moins un orifice traversant 8 que comporte le cadre, selon le cas, inférieur 20, supérieur 30, latéral (40 ; 40'), voire longitudinal (50 ; 50'). C'est, plus particulièrement, la première aile 70 et/ou la deuxième aile 70', que comporte le ou les profilés 7 que comporte ledit cadre (20 ; 30 ; 40, 40' ; 50, 50'), plus particulièrement que comporte la cornière qui constitue le profilé 7 que comporte un tel cadre (20 ; 30 ; 40, 40' ; 50, 50'), qui comporte, alors, ledit au moins un orifice traversant 8.

D'autre part, de tels moyens de solidarisation réversible (22; 32; 42, 42'; 52, 52') comportent au moins un insert taraudé 80 que comporte la plaque, selon le cas, inférieure 21, supérieure 31, latérale (41 ; 41'), voire longitudinale (51 ; 51'), donc la première plaque P et/ou la deuxième plaque P' susmentionnées et, d'autre part encore, au moins une vis 81, qui traverse un tel orifice traversant 8, et qui coopère avec un tel insert taraudé 80.

La présence d'un tel insert taraudé 80 permet, avantageusement, de monter (plus particulièrement d'assembler) et de démonter (plus particulièrement de désassembler) le dispositif démontable de transport 1 de manière simple, rapide, précise, efficace, répétitive, sans erreur, et sans occasionner de dégradation. La présence d'un tel insert taraudé 80 permet, également, de garantir une fixation appropriée (notamment en terme de positionnement, de qualité et de pérennité de fixation) d'un profilé 7 sur au moins une plaque (P ; P'). Finalement, la présence d'un tel insert taraudé 80 permet de contribuer à la rigidité du dispositif 1.

Encore une autre caractéristique consiste en ce que l'insert taraudé 80 de la première plaque P est situé à une distance déterminée du chant de cette première plaque P tandis que l'orifice traversant 8 de la première aile 70 (contre laquelle vient en applique la face de cette première plaque P) est situé à une distance déterminée de la première butée 71 (contre laquelle vient en applique le chant cette première plaque P). De même, l'insert taraudé 80 de la deuxième plaque P' est situé à une distance déterminée du chant de cette deuxième plaque P' tandis que l'orifice traversant 8 de la deuxième aile 70' (contre laquelle vient en applique la face de cette deuxième plaque P') est situé à une distance déterminée de la deuxième butée 71' (contre laquelle vient en applique le chant de cette deuxième plaque P'). Ces caractéristiques permettent, avantageusement, un positionnement approprié d'une telle plaque (P ; P') par rapport à un profilé 7 tel que susmentionné, ceci en vue de l'assemblage d'une telle plaque (P ; P') avec un tel profilé 7 et/ou en vue de contribuer à la rigidité du dispositif 1.

Tel que mentionné ci-dessus, le dispositif de transport 1 comporte, aussi, des parois longitudinales (5 ; 5') dont l'une au moins 5 comporte au moins une porte sectionnelle (6 ; 6A) mobile entre une position de fermeture (figure 1) et une position d'ouverture (figure 4) du dispositif 1.

En fait, le dispositif de transport 1 comporte au moins une paroi longitudinale 5 qui comporte une porte sectionnelle supérieure 6 et une porte sectionnelle inférieure 6A. Selon un mode de réalisation préféré de l'invention illustré sur les figures en annexe, le dispositif de transport 1 comporte plusieurs parois longitudinales (5 ; 5') dont une seule 5 comporte une porte sectionnelle supérieure 6 et une porte sectionnelle inférieure 6A.

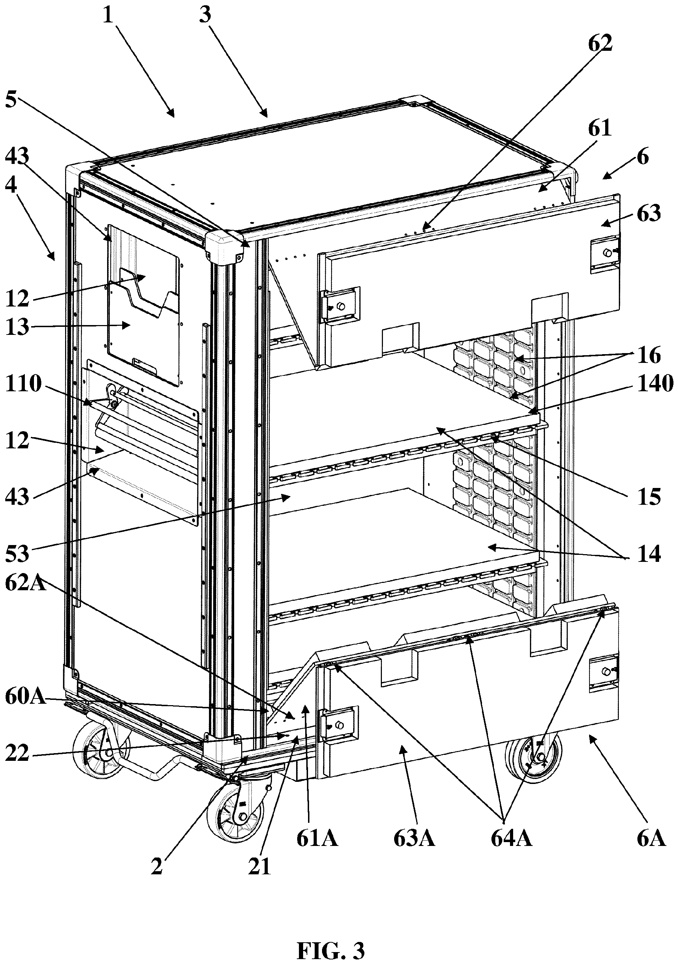

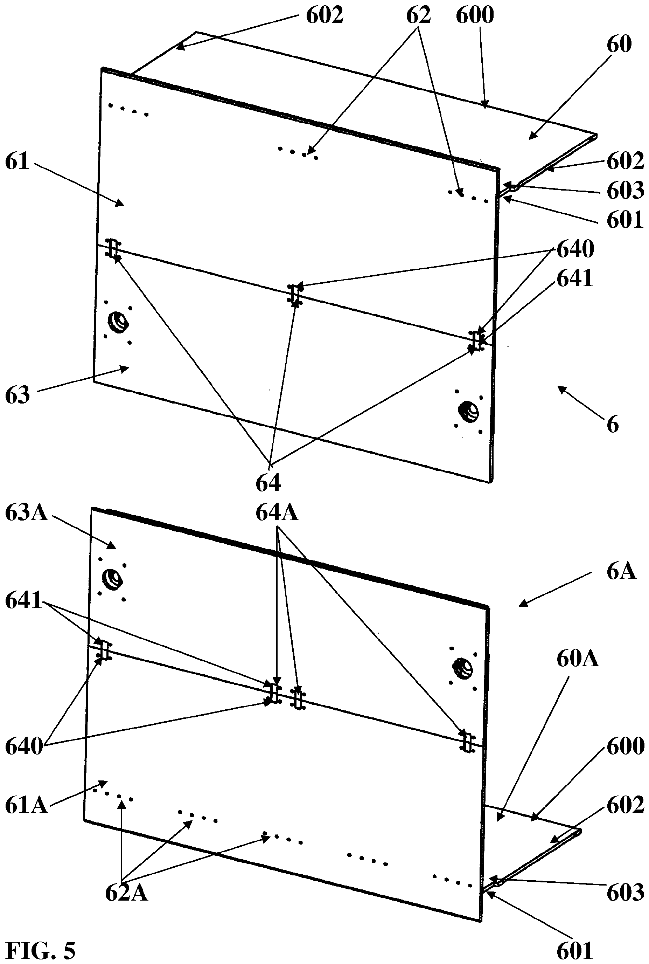

La porte sectionnelle 6 ou les portes sectionnelles (6 ; 6A) comportent, chacune, une section interne (60 ; 60A) qui est positionnée à l'intérieur du dispositif de transport 1 et qui est mobile à l'intérieur de ce dispositif de transport 1, ceci entre une position avancée (figures 1, 3 et 5) et une position rétractée (figure 4). En fait et dans le cas d'un dispositif de transport 1 qui comporte une porte sectionnelle supérieure 6 et une porte sectionnelle inférieure 6A, la porte sectionnelle supérieure 6 comporte une section interne supérieure 60 tandis que la porte sectionnelle inférieure 6A comporte une section interne inférieure 60A.

En fait, la section interne (60 ; 60A) d'une telle porte sectionnelle (6 ; 6A) présente, d'une part, une extrémité arrière 600 qui est orientée en direction d'une paroi longitudinale 5' du dispositif 1 et, d'autre part, une extrémité avant 601, qui est orientée dans une direction opposée à l'extrémité arrière 600, et qui est orientée en direction d'une ouverture 53 que comporte une autre paroi longitudinale 5 de ce dispositif 1.

Pour que la section interne (60 ; 60A) soit mobile à l'intérieur du dispositif de transport 1, ce dispositif de transport 1 comporte des moyens de montage en coulissement (non représentés) de cette section interne (60 ; 60A) de la porte sectionnelle 6 ou des portes sectionnelles (6 ; 6A), ceci à l'intérieur du dispositif de transport 1.

En fait, de tels moyens de montage en coulissement comportent, de part et d'autre de la section interne (60 ; 60A), une coulisse de guidage, qui est plus particulièrement réalisée en un matériau polymère (de préférence du polyéthylène), et à l'intérieur de laquelle une des bordures latérales 602 de la section interne (60 ; 60A) est montée en coulissement.

La porte sectionnelle 6 ou les portes sectionnelles (6 ; 6A) comportent, également, chacune, une section intermédiaire (61 ; 61A) mobile entre, d'une part, une position déployée à l'extérieur du dispositif de transport 1 (figure 1) dans laquelle cette section intermédiaire (61 ; 61A) forme, de préférence, un angle non nul (notamment droit) avec la section interne (60 ; 60A) et, d'autre part, une position repliée à l'intérieur du dispositif de transport (figure 4) dans laquelle au moins une partie de cette section intermédiaire (61 ; 61A) est, de préférence, rabattue par-dessus ou par-dessous au moins une partie de la section interne (60 ; 60A). Là encore et dans le cas d'un dispositif de transport 1 qui comporte une porte sectionnelle supérieure 6 et une porte sectionnelle inférieure 6A, la porte sectionnelle supérieure 6 comporte une section intermédiaire supérieure 61 tandis que la porte sectionnelle inférieure 6A comporte une section intermédiaire inférieure 61A.

Une telle section intermédiaire (61 ; 61A) présente, d'une part, une extrémité libre (en particulier une extrémité libre supérieure, respectivement inférieure) orientée en direction d'une extrémité (en particulier une extrémité supérieure, respectivement inférieure) du dispositif de transport 1 et, d'autre part, une extrémité de raccordement (en particulier une extrémité de raccordement inférieure, respectivement supérieure) orientée en direction d'une autre extrémité (en particulier une extrémité inférieure, respectivement supérieure) de ce dispositif de transport 1.

La porte sectionnelle 6 ou les portes sectionnelles (6 ; 6A) comportent, aussi, chacune, des moyens d'articulation intermédiaire (62 ; 62A) pour articuler la section intermédiaire (61 ; 61A) par rapport à la section interne (60 ; 60A)**.** Là encore et dans le cas d'un dispositif de transport 1 qui comporte une porte sectionnelle supérieure 6 et une porte sectionnelle inférieure 6A, la porte sectionnelle supérieure 6 comporte des moyens d'articulation intermédiaire supérieure 62 tandis que la porte sectionnelle inférieure 6A comporte des moyens d'articulation intermédiaire inférieure 62A.

En fait, ces moyens d'articulation intermédiaire (62 ; 62A) comportent, d'une part, une première partie, qui est rendue solidaire d'une bordure d'extrémité 603 de la section interne (60 ; 60A) de la porte sectionnelle (6 ; 6A) et qui, de préférence, s'étend à l'avant de l'extrémité avant 601 de cette section interne (60 ; 60A) et, d'autre part, une deuxième partie, qui est rendue solidaire de la section intermédiaire (61 ; 61A), et qui, de préférence, est localisée en retrait par rapport l'extrémité libre (supérieure ; respectivement inférieure) de cette section intermédiaire (61 ; 61A). La première partie et la deuxième partie de ces moyens d'articulation intermédiaire (62 ; 62A) sont articulées l'une par rapport à l'autre.

En fait, cette section interne (60 ; 60A), cette section intermédiaire (61 ; 61A) et ces moyens d'articulation intermédiaire (62 ; 62A) sont configurés (notamment dimensionnés et agencés) en sorte de pouvoir s'escamoter intégralement à l'intérieur du dispositif de transport 1, ceci en position d'ouverture du dispositif de transport 1 et, donc, en position repliée de la section intermédiaire (61 ; 61A) de la porte sectionnelle (6 ; 6A).

En particulier et lorsque la deuxième partie des moyens d'articulation intermédiaire (62 ; 62A) est localisée en retrait par rapport l'extrémité libre (supérieure ; respectivement inférieure) de la section intermédiaire (61 ; 61A), la section intermédiaire supérieure 61 (respectivement inférieure 61A) comporte une bordure d'extrémité supérieure (respectivement inférieure), qui s'étend à partir de l'extrémité libre supérieure (respectivement inférieure) et en direction de l'extrémité de raccordement inférieure (respectivement supérieure), et qui peut, alors, se rabattre par-dessus (respectivement par-dessous) la bordure d'extrémité 603 de la section interne supérieure 60 (respectivement inférieure 60A) de la porte sectionnelle supérieure 6 (respectivement inférieure 6A), ceci en position d'ouverture du dispositif de transport 1 et, donc, en position repliée de la section intermédiaire (61 ; 61A) de la porte sectionnelle (6 ; 6A).

De manière additionnelle, la porte sectionnelle 6 ou les portes sectionnelles (6 ; 6A) comportent, chacune, encore, d'autre part, une section distale (63 ; 63A) mobile entre une position déployée à l'extérieur du dispositif de transport 1 (figure 1) dans laquelle cette section distale (63 ; 63A) s'étend, de préférence, selon un même plan que la section intermédiaire (61 ; 61A) et une position repliée à l'intérieur du dispositif de transport 1 (figure 4) dans laquelle cette section distale (63 ; 63') est, de préférence, rabattue, selon le cas, par-dessus ou par-dessous cette section intermédiaire (61 ; 61A)**.** Là encore, lorsque le dispositif de transport 1 comporte une porte sectionnelle supérieure 6 et une porte sectionnelle inférieure 6A, la porte sectionnelle supérieure 6 comporte une section distale supérieure 63 tandis que la porte sectionnelle inférieure 6A comporte une section distale inférieure 63A.

En fait, dans la position déployée à l'extérieur du dispositif de transport 1, cette section distale (63 ; 63A) s'étend, de préférence, selon un même plan que la section intermédiaire (61 ; 61A) de la porte sectionnelle (6 ; 6A) tandis que, dans la position repliée à l'intérieur du dispositif de transport 1, la section distale supérieure 63 est, de préférence, rabattue par-dessus la section intermédiaire supérieure 61 et/ou la section distale inférieure 63A est, de préférence, rabattue par-dessous (voire par-dessus) la section intermédiaire inférieure 61A.

Une telle section distale (63 ; 63A) présente, d'une part, une extrémité libre (en particulier une extrémité libre inférieure, respectivement supérieure) orientée en direction d'une extrémité (en particulier une extrémité inférieure, respectivement supérieure) du dispositif de transport 1 et, d'autre part, une extrémité de raccordement (en particulier une extrémité de raccordement supérieure, respectivement inférieure) orientée en direction d'une autre extrémité (en particulier une extrémité supérieure, respectivement inférieure) de ce dispositif de transport 1 ainsi qu'en direction de l'extrémité de raccordement (inférieure, respectivement supérieure) que comporte la section intermédiaire (supérieure 61, respectivement inférieure 61A).

Le porte sectionnelle 6 ou les portes sectionnelles (6 ; 6A) comportent, alors, également, des moyens d'articulation distale (64 ; 64A) pour articuler la section distale (63; 63A) par rapport à la section intermédiaire (61 ; 61A) d'une telle porte sectionnelle (6 ; 6A).

En fait, ces moyens d'articulation distale (64 ; 64A) comportent, d'une part, une première partie 640, qui est rendue solidaire d'une bordure d'extrémité de la section intermédiaire (61 ; 61A) de la porte sectionnelle (6 ; 6A), et qui, de préférence, s'étend à l'avant de l'extrémité de raccordement de cette section intermédiaire (61 ; 61A) et, d'autre part, une deuxième partie 641, qui est rendue solidaire d'une bordure d'extrémité de la section distale (63 ; 63A), et qui, de préférence, s'étend à l'avant de l'extrémité de raccordement de cette section distale (63 ; 63A).

La première partie 640 et la deuxième partie 641 de ces moyens d'articulation distale (64 ; 64A) sont articulées l'une par rapport à l'autre.

En fait, la section interne (60 ; 60A), la section intermédiaire (61 ; 61A), les moyens d'articulation intermédiaire (62 ; 62A), la section distale (63 ; 63A) et les moyens d'articulation distale (64 ; 64A) sont configurés (notamment dimensionnés et agencés) en sorte de pouvoir s'escamoter intégralement à l'intérieur du dispositif de transport 1, ceci en position d'ouverture du dispositif de transport 1 et, donc, en position repliée des sections intermédiaires (61 ; 61A) et distale (63 ; 63A) de la porte sectionnelle (6 ; 6A).

En particulier, la section distale supérieure 63 (respectivement inférieure 63A) peut, alors, se rabattre par-dessus (respectivement par-dessous) la section intermédiaire supérieure 61 (respectivement la section intermédiaire inférieure 61A), ceci en position d'ouverture du dispositif de transport 1 et, donc, en position repliée des sections intermédiaires (61 ; 61A) et distales (63 ; 63A) de la porte sectionnelle (6 ; 6A).

Une autre caractéristique consiste en ce que les moyens d'articulation intermédiaire (62 ; 62A) et/ou les moyens d'articulation distale (64 ; 64A) sont constitués par une charnière.

En position de fermeture du dispositif 1 (figure 1), la section interne (60 ; 60A) de la ou des portes sectionnelles (6 ; 6A) s'étend de manière horizontale tandis que la section intermédiaire (61 ; 61A) et la section distale (63 ; 63A) de cette ou de ces portes sectionnelles (6 ; 6A) s'étendent de manière verticale (plus particulièrement selon un même plan) et perpendiculairement à la section interne (60 ; 60A) d'une telle porte sectionnelle (6 ; 6A).

En position d'ouverture du dispositif (figure 4), la section interne (60 ; 60A), la section intermédiaire (61; 61A) et la section distale (63 ; 63A) de la ou des portes sectionnelles (6 ; 6A) s'étendent de manière horizontale, parallèle entre elles, et en sorte que la section distale (63 ; 63A) se positionne, selon le cas, par-dessus ou par-dessous la section intermédiaire (61 ; 61A) dont une partie peut se positionner, selon le cas, par-dessus ou par-dessous la section interne (60 ; 60A).

Une autre caractéristique consiste en ce que la section intermédiaire (61; 61A) et la section distale (63 ; 63A), voire encore la section interne (60 ; 60A), de la ou des portes sectionnelles (6 ; 6A) sont constituées par une plaque, de préférence rigide, à l'instar de la plaque inférieure 21, supérieure 31 ou latérale (41 ; 41').

On observera que le dispositif de transport 1 est dépourvu de moyens de guidage ou de moyens de montage en coulissement de la section intermédiaire (61 ; 61A) et de la section distale (63 ; 63A) de la ou des portes sectionnelles (6 ; 6A) .

Encore une autre caractéristique concerne le fait que le dispositif de transport 1 comporte des moyens de compensation (non représentés) pour compenser le poids de la porte sectionnelle 6 ou des portes sectionnelles (6 ; 6A).

De tels moyens de compensation peuvent adopter la forme d'un ressort ou analogue.

On observera que la ou les portes sectionnelles (6 ; 6A) décrites ci-dessus permettent, avantageusement, d'une part et en position déployée d'une telle porte sectionnelle (6 ; 6A), d'améliorer la rigidité du dispositif de transport 1. En effet, en position déployée d'une telle porte sectionnelle (6 ; 6A), au moins la section intermédiaire (61 ; 61A) et la section distale (63 ; 63A) de la ou des portes sectionnelles (6 ; 6A) forment un ensemble rigide, que comporte une paroi longitudinale (5 ; 5'), ceci à l'instar de la plaque inférieure 21, supérieure 31 ou latérale (41 ; 41').

D'autre part et en position repliée d'une telle porte sectionnelle (6 ; 6A), la ou les portes sectionnelles (6 ; 6A) décrites ci-dessus permettent, avantageusement, de gagner de la place de stockage d'une telle porte sectionnelle (6 ; 6A) à l'intérieur du dispositif de transport 1 (notamment par rapport à d'autres portes sectionnelles de l'état de la technique qui comportent des sections articulées deux à deux). D'autre part encore et entre la position déployée et la position repliée, cette ou ces portes sectionnelles (6 ; 6A) permettent, avantageusement, de faciliter et d'optimiser le déploiement et le repliement d'une telle porte sectionnelle (6 ; 6A).

On observera, également, que la ou les portes sectionnelles (6 ; 6A) décrites ci-dessus (voire les moyens de montage en coulissement qui y sont associés) n'équipent pas exclusivement un dispositif démontable de transport 1 tel que décrit ci-dessus mais sont, également, susceptibles d'équiper un dispositif de transport 1 non démontable qui présente au moins une partie des caractéristiques décrites ci-dessus. Cependant et dans le cas d'un dispositif démontable de transport 1, la ou les portes sectionnelles (6 ; 6A) décrites ci-dessus (voire ces moyens de montage en coulissement) permettent, avantageusement, de faciliter, d'une part, le montage et le démontage d'un tel dispositif démontable de transport 1 et, d'autre part, le conditionnement et le stockage des différents éléments d'un tel dispositif démontable de transport 1 lorsqu'il est démonté.

Une caractéristique additionnelle concerne le fait que le dispositif de transport comporte une pluralité de moyens de roulement 9.

Ces moyens de roulement 9 comportent, chacun, d'une part, une chape, d'autre part, des moyens de montage d'une telle chape sur la paroi inférieure 30 du dispositif de transport 1, ceci en rotation selon un axe vertical, d'autre part encore, une roue, et, d'autre part aussi, des moyens de montage d'une telle roue sur une telle chape, ceci en rotation selon un axe horizontal.

Le dispositif de transport 1 comporte, alors aussi, au moins un moyen de freinage 10 pour freiner au moins un de ces moyens de roulement 9 et des moyens de commande 11 pour commander au moins un tel moyen de freinage 10.

De manière préférée, le dispositif de transport 1 comporte des moyens de commande 11 pour commander une pluralité de moyens de freinage 10.

Une autre caractéristique concerne le fait que le dispositif de transport 1 comporte au moins un logement 12 s'étendant à l'intérieur du dispositif de transport 1, à l'arrière de l'une des parois latérales (4 ; 4'), et accessible au travers d'une ouverture 43 que comporte une telle paroi latérale (4 ; 4').

En fait, au moins une partie des moyens de commande 11 dudit au moins un moyen de freinage 10 est localisée à l'intérieur d'un tel logement 12 ou de l'un des logements 12.

A ce propos, il convient d'observer que la partie des moyens de commande 11 qui est localisée à l'intérieur d'un tel logement 12 ou de l'un des logements 12 comporte une poignée de commande 110 pour commander la désactivation dudit au moins un moyen de freinage 10. Cette localisation permet, alors avantageusement, d'éviter un actionnement de cette poignée de commande 110 par inadvertance, notamment sous l'effet du déplacement du dispositif de transport 1 par rapport à un autre dispositif de transport 1 ou par rapport à un obstacle ou sous l'effet du déplacement d'un tel autre dispositif de transport 1 ou d'un tel obstacle, ceci par rapport au dispositif de transport 1.

Par ailleurs, une autre partie des moyens de commande 11 dudit au moins moyen de freinage 10 comporte une pédale 111 pour commander l'activation dudit au moins un moyen de freinage 10.

Une autre caractéristique de l'invention concerne le fait que le dispositif de transport 1 comporte au moins un porte document 13 localisé à l'intérieur du logement 12 ou de l'un des logements 12.

Une caractéristique additionnelle du dispositif de transport 1 concerne le fait qu'il comporte au moins un plateau 14, au moins un filet de maintien (non représenté) pour maintenir le matériel à l'intérieur du dispositif de transport 1, ainsi que des moyens d'accrochage 15, que comporte un tel plateau 14, et qui sont conçus pour coopérer avec un tel filet de maintien (plus particulièrement avec les mailles de ce filet), ceci pour assurer une fixation réversible d'un tel filet de maintien sur un tel plateau 14.

En fait, un tel filet de maintien peut être étendu par-dessus un tel plateau 14 et/ou peut être configuré pour maintenir le matériel sur un tel plateau 14.

Tel que visible sur les figures en annexe, un tel plateau 14 comporte au moins une bordure 140 qui comporte les moyens d'accrochage 15.

De tels moyens d'accrochage 15 peuvent adopter la forme d'un élément en « T » et/ou être constitués par un usinage et/ou une découpe de la bordure 140 d'un tel plateau 14.

Une autre caractéristique concerne le fait qu'un tel plateau 14 peut comporter un revêtement en mousse.

Le dispositif de transport 1 comporte, encore, des moyens de montage 16 du ou des plateaux 14 à l'intérieur de ce dispositif de transport 1. De tels moyens de montage 16 sont, de préférence, constitués par des moyens de montage 16 en coulissement d'un tel plateau 14 par rapport aux parois (2 ; 3 ; 4, 4' ; 5, 5') du dispositif de transport 1, plus particulièrement par rapport aux parois latérales (4 ; 4').

En fait, de tels moyens de montage 16 comportent, de part et d'autre d'un tel plateau 14, au moins une coulisse, d'une part, que comporte une paroi latérale (4 ; 4') ou qui est associée à une telle paroi latérale (4 ; 4') et, d'autre part, à l'intérieur de laquelle une des bordures latérales dudit plateau 14 est montée en coulissement.

Le dispositif de transport 1 comporte, aussi, au moins un amortisseur 17 et/ou des moyens de réception 18 des fourches d'un chariot de manutention.

## Revendications

1. Dispositif démontable de transport (1) de matériel comportant, d'une part, une paroi inférieure (2) comportant un cadre inférieur (20), une plaque inférieure (21) et des moyens de solidarisation réversible (22) pour rendre ce cadre inférieur (20) solidaire de manière réversible de cette plaque inférieure (21), d'autre part, une paroi supérieure (3) comportant un cadre supérieur (30), une plaque supérieure (31) et des moyens de solidarisation réversible (32) pour rendre ce cadre supérieur (30) solidaire de manière réversible de cette plaque supérieure (31), d'autre part encore, des parois latérales (4 ; 4') comportant, chacune, un cadre latéral (40 ; 40'), une plaque latérale (41 ; 41') et des moyens de solidarisation réversible (42 ; 42') pour rendre un tel cadre latéral (40 ; 40') solidaire de manière réversible d'une telle plaque latérale (41 ; 41') et, d'autre part aussi, des parois longitudinales (5 ; 5') comportant, chacune, un cadre longitudinal (50 ; 50') et dont l'une au moins comporte au moins une porte sectionnelle (6 ; 6A) mobile entre une position de fermeture et une position d'ouverture du dispositif de transport (1), **caractérisé par le fait que** les moyens de solidarisation réversible (22 ; 32 ; 42, 42') comportent, d'une part, au moins un orifice traversant (8) que comporte le cadre, selon le cas, inférieur (20), supérieur (30), latéral (40 ; 40'), d'autre part, au moins un insert taraudé (80) que comporte la plaque, selon le cas, inférieure (21), supérieure (31), latérale (41 ; 41'), et, d'autre part encore, au moins une vis (81), qui traverse un tel orifice traversant (8), et qui coopère avec un tel insert taraudé (80).

2. Dispositif démontable de transport (1) selon la revendication 1, **caractérisé par le fait que** le cadre inférieur (20) et/ou le cadre supérieur (30) et/ou les cadres latéraux (40 ; 40') et/ou les cadres longitudinaux (50 ; 50') comportent, chacun, une pluralité de profilés (7).

3. Dispositif démontable de transport (1) selon la revendication 2, **caractérisé par le fait qu'**au moins une partie des profilés (7) d'un tel cadre (20 ; 30 ; 40, 40' ; 50, 50') adopte la forme d'une cornière et comporte, d'une part, une première aile (70) contre laquelle vient en applique la face d'une première plaque (P), d'autre part, une première butée (71) contre laquelle vient en applique le chant de la première plaque (P), d'autre part encore, une deuxième aile (70') contre laquelle vient en applique la face d'une deuxième plaque (P') et, d'autre part aussi, une deuxième butée (71') contre laquelle vient en applique le chant de la deuxième plaque (P').

4. Dispositif démontable de transport (1) selon la revendication 3, **caractérisé par le fait que** la première aile (70) et/ou la deuxième aile (70'), que comporte le ou les profilés (7) que comporte ledit cadre (20 ; 30 ; 40, 40' ; 50, 50'), comporte ledit au moins un orifice traversant (8).

5. Dispositif démontable de transport (1) selon la revendication 3, **caractérisé par le fait que**, d'une part, dans le ou les profilés (7), la première aile (70) s'étend selon un premier plan tandis que la deuxième aile (70') s'étend à partir de la première aile (70) et selon un deuxième plan perpendiculaire au premier plan et, d'autre part, le ou les profilés (7) comportent, chacun, au moins une nervure (72), qui s'étend à partir de la première aile (70) et/ou à partir de la deuxième aile (70'), et qui comporte la première butée (71) et/ou la deuxième butée (71').

6. Dispositif démontable de transport (1) selon la revendication 5, **caractérisé par le fait que** ladite au moins une nervure (72) comporte, d'une part, une portion proximale (720) qui s'étend à partir de la première aile (70) et/ou à partir de la deuxième aile (70') et, d'autre part, deux portions distales (721 ; 721'), qui s'étendent à partir de la portion proximale (720) en divergeant, et qui comportent, chacune, une extrémité libre dont l'une comporte la première butée (71) et dont l'autre comporte la deuxième butée (71')**.**

7. Dispositif démontable de transport (1) selon l'une quelconque des revendications précédentes, **caractérisé par le fait que** la ou les portes sectionnelles (6 ; 6A) comportent, chacune, d'une part, une section interne (60 ; 60A) positionnée à l'intérieur du dispositif de transport (1) et mobile à l'intérieur de ce dispositif de transport (1), d'autre part, une section intermédiaire (61 ; 61A) mobile entre une position déployée à l'extérieur du dispositif de transport (1) dans laquelle cette section intermédiaire (61 ; 61A) forme un angle non nul avec la section interne (60 ; 60A) et une position repliée à l'intérieur du dispositif de transport (1) dans laquelle au moins une partie de cette section intermédiaire (61 ; 61A) est rabattue par-dessus ou par-dessous au moins une partie de la section interne (60 ; 60A), d'autre part encore, des moyens d'articulation intermédiaire (62 ; 62A) pour articuler la section intermédiaire (61 ; 61A) par rapport à la section interne (60 ; 60A)**.**

8. Dispositif démontable de transport (1) selon la revendication 7, **caractérisé par le fait que** le dispositif de transport (1) comporte des moyens de montage en coulissement de la section interne (60 ; 60A) de la porte sectionnelle (6) ou des portes sectionnelles (6 ; 6A), ceci à l'intérieur du dispositif de transport (1).

9. Dispositif démontable de transport (1) selon la revendication 8, **caractérisé par le fait que** les moyens de montage en coulissement comportent, de part et d'autre de la section interne (60 ; 60A), une coulisse de guidage, qui est plus particulièrement réalisée en un matériau polymère, et à l'intérieur de laquelle une des bordures latérales (602) de la section interne (60 ; 60A) est montée en coulissement.

10. Dispositif démontable de transport (1) selon la revendication 7, **caractérisé par le fait que** les moyens d'articulation intermédiaire (62 ; 62A) comportent, d'une part, une première partie qui est rendue solidaire d'une bordure d'extrémité (603) de la section interne (60 ; 60A) de la porte sectionnelle (6 ; 6A) et, d'autre part, une deuxième partie, qui est rendue solidaire de la section intermédiaire (61 ; 61A), et qui est localisée en retrait par rapport une extrémité libre de cette section intermédiaire (61 ; 61A).

11. Dispositif démontable de transport (1) selon l'une quelconque des revendications 7 à 10, **caractérisé par le fait que** la ou les portes sectionnelles (6 ; 6A) comportent, chacune, encore, d'autre part, une section distale (63 ; 63A) mobile entre une position déployée à l'extérieur du dispositif de transport (1) dans laquelle cette section distale (63 ; 63A) s'étend selon un même plan que la section intermédiaire (61 ; 61A) et une position repliée à l'intérieur du dispositif de transport (1) dans laquelle cette section distale (63 ; 63') est rabattue par-dessus ou par-dessous cette section intermédiaire (61 ; 61A) et, d'autre part, des moyens d'articulation distale (64 ; 64') pour articuler la section distale (63 ; 63') par rapport à la section intermédiaire (61 ; 61').

12. Dispositif démontable de transport (1) selon l'une quelconque des revendications précédentes, **caractérisé par le fait que** le dispositif de transport (1) comporte une pluralité de moyens de roulement (9), au moins un moyen de freinage (10) pour freiner au moins un de ces moyens de roulement (9) et des moyens de commande (11) pour commander au moins un tel moyen de freinage (10).

13. Dispositif démontable de transport (1) selon l'une quelconque des revendications précédentes, **caractérisé par le fait que** le dispositif de transport (1) comporte au moins un logement (12) s'étendant à l'intérieur du dispositif de transport (1), à l'arrière de l'une des parois latérales (4 ; 4'), et accessible au travers d'une ouverture (43) que comporte une telle paroi latérale (4 ; 4').

14. Dispositif démontable de transport (1) selon les revendications 12 et 13, **caractérisé par le fait qu'**au moins une partie des moyens de commande (11) dudit au moins un moyen de freinage (10) est localisée à l'intérieur du logement (12) ou de l'un des logements (12).

15. Dispositif démontable de transport (1) selon la revendication 13, **caractérisé par le fait que** le dispositif de transport (1) comporte au moins un porte document (13) localisé à l'intérieur du logement (12) ou de l'un des logements (12).

## Patentansprüche

1. Abnehmbare Transportvorrichtung (1) für Material, umfassend einerseits eine untere Wand (2), die einen unteren Rahmen (20), eine untere Platte (21) und reversible Verbindungsmittel (22) umfasst, um diesen unteren Rahmen (20) mit dieser unteren Platte (21) reversibel fest zu verbinden, andererseits eine obere Wand (3), die einen oberen Rahmen (30), eine obere Platte (31) und reversible Verbindungsmittel (32) umfasst, um diesen oberen Rahmen (30) reversibel fest mit dieser oberen Platte (31) zu verbinden, andererseits noch Seitenwände (4; 4'), die jeweils einen Seitenrahmen (40; 40'), eine Seitenplatte (41; 41') und reversible Verbindungsmittel (42; 42') umfassen, um einen solchen Seitenrahmen (40; 40') reversibel fest mit einer solchen Seitenplatte (41; 41') zu verbinden und andererseits auch Längswände (5; 5'), die jeweils einen Längsrahmen (50; 50') umfassen und von denen mindestens eine mindestens eine Abschnittstür (6; 6A) umfasst, die zwischen einer Schließstellung und einer Öffnungsstellung der Transportvorrichtung (1) beweglich ist, **dadurch gekennzeichnet, dass** die reversiblen Verbindungsmittel (22; 32; 42, 42') einerseits mindestens eine Durchgangsöffnung (8) umfassen, die der Rahmen je nach Fall unten (20), oben (30), seitlich (40; 40') umfasst, andererseits mindestens einen Gewindeeinsatz (80), den die Platte, je nach Fall, unten (21), oben (31), seitlich (41; 41') umfasst, und andererseits noch mindestens eine Schraube (81), die durch eine solche Durchgangsöffnung (8) hindurchgeht und die mit einem solchen Gewindeeinsatz (80) zusammenwirkt.

2. Abnehmbare Transportvorrichtung (1) nach Anspruch 1, **dadurch gekennzeichnet, dass** der untere Rahmen (20) und/oder der obere Rahmen (30) und/oder die seitlichen Rahmen (40; 40') und/oder die Längsrahmen (50; 50') jeweils mehrere Profile (7) umfassen.

3. Abnehmbare Transportvorrichtung (1) nach Anspruch 2, **dadurch gekennzeichnet, dass** mindestens ein Teil der Profile (7) eines solchen Rahmens (20; 30; 40, 40'; 50, 50') die Form eines Winkels annimmt und einerseits einen ersten Flügel (70), an dem die Fläche einer ersten Platte (P) anliegt, und andererseits einen ersten Anschlag (71), an dem die Kante der ersten Platte (P) anliegt, umfasst, und andererseits einen zweiten Flügel (70'), an dem die Fläche einer zweiten Platte (P') anliegt, und andererseits auch einen zweiten Anschlag (71'), an dem die Kante der zweiten Platte (P') anliegt.

4. Abnehmbare Transportvorrichtung (1) nach Anspruch 3, **dadurch gekennzeichnet, dass** der erste Flügel (70) und/oder der zweite Flügel (70'), den das oder die Profile (7) umfassen, die der Rahmen (20; 30; 40, 40'; 50, 50') umfasst, die mindestens eine Durchgangsöffnung (8) umfasst.

5. Abnehmbare Transportvorrichtung (1) nach Anspruch 3, **dadurch gekennzeichnet, dass** sich einerseits in dem oder den Profilen (7) der erste Flügel (70) entlang einer ersten Ebene erstreckt, während sich der zweite Flügel (70') ausgehend vom ersten Flügel (70) und entlang einer zweiten Ebene senkrecht zur ersten Ebene erstreckt, und, andererseits das oder die Profile (7) jeweils mindestens eine Rippe (72) umfassen, die sich ausgehend von dem ersten Flügel (70) und/oder ausgehend von dem zweiten Flügel (70') erstreckt und die den ersten Anschlag (71) und/oder den zweiten Anschlag (71') umfasst.

6. Abnehmbare Transportvorrichtung (1) nach Anspruch 5, **dadurch gekennzeichnet, dass** die mindestens eine Rippe (72) einerseits einen proximalen Abschnitt (720), der sich ausgehend vom ersten Flügel (70) und/oder ausgehend vom zweiten Flügel (70') erstreckt, und andererseits zwei distale Abschnitte (721; 721'), die sich von dem proximalen Abschnitt (720) aus divergierend erstrecken und jeweils ein freies Ende umfassen, von denen eines den ersten Anschlag (71) und das andere den zweiten Anschlag (71') umfasst.

7. Abnehmbare Transportvorrichtung (1) nach einem der vorhergehenden Ansprüche, **dadurch gekennzeichnet, dass** die Abschnittstür(en) (6; 6A) jeweils einerseits einen inneren Abschnitt (60; 60A), der im Inneren der Transportvorrichtung (1) positioniert und im Inneren dieser Transportvorrichtung (1) beweglich ist, und andererseits einen Zwischenabschnitt (61; 61A) umfasst, der zwischen einer ausgeklappten Position außerhalb der Transportvorrichtung (1), in der dieser Zwischenabschnitt (61; 61A) einen Winkel ungleich Null mit dem Innenabschnitt (60; 60A) bildet, und einer eingeklappten Position innerhalb der Transportvorrichtung (1), in der mindestens ein Teil dieses Zwischenabschnitts (61; 61A) über oder unter dem Innenabschnitt (60; 60A) liegt, beweglich ist, andererseits noch Zwischengelenkmittel (62; 62A), um den Zwischenabschnitt (61; 61A) in Bezug auf den Innenabschnitt (60; 60A) anzulenken.

8. Abnehmbare Transportvorrichtung (1) nach Anspruch 7, **dadurch gekennzeichnet, dass** die Transportvorrichtung (1) Mittel zur Gleitmontage des Innenabschnitts (60; 60A) der Abschnittstür (6) oder der Abschnittstüren (6; 6A) im Inneren der Transportvorrichtung (1) umfasst.

9. Abnehmbare Transportvorrichtung (1) nach Anspruch 8, **dadurch gekennzeichnet, dass** die Mittel zur Gleitmontage auf beiden Seiten des Innenabschnitts (60; 60A) einen Führungsschlitten umfassen, der insbesondere aus einem Polymermaterial hergestellt ist und in dem eine der Seitenkanten (602) des Innenabschnitts (60; 60A) gleitend montiert ist.

10. Abnehmbare Transportvorrichtung (1) nach Anspruch 7, **dadurch gekennzeichnet, dass** die Zwischengelenkmittel (62; 62A) einerseits einen ersten Teil, der fest mit einer Endkante (603) des Innenabschnitts (60; 60A) der Abschnittstür (6; 6A) verbunden ist, und andererseits einen zweiten Teil umfassen, der fest mit dem Zwischenabschnitt (61; 61A) verbunden ist und der in Bezug auf ein freies Ende dieses Zwischenabschnitts (61; 61A) zurückversetzt angeordnet ist.

11. Abnehmbare Transportvorrichtung (1) nach einem der Ansprüche 7 bis 10, **dadurch gekennzeichnet, dass** die Abschnittstür(en) (6; 6A) andererseits jeweils noch einen distalen Abschnitt (63; 63A) umfasst (umfassen), der zwischen einer ausgeklappten Position außerhalb der Transportvorrichtung (1), in der sich dieser distale Abschnitt (63; 63A) in derselben Ebene wie der Zwischenabschnitt (61; 61A) erstreckt, und einer eingeklappten Position innerhalb der Transportvorrichtung (1), in der dieser distale Abschnitt (63; 63A) über oder unter diesen Zwischenabschnitt (61; 61A) geklappt ist, beweglich ist, und andererseits distale Gelenkmittel (64; 64'), um den distalen Abschnitt (63; 63') in Bezug auf den Zwischenabschnitt (61; 61') anzulenken.

12. Abnehmbare Transportvorrichtung (1) nach einem der vorhergehenden Ansprüche, **dadurch gekennzeichnet, dass** die Transportvorrichtung (1) mehrere Rollmittel (9), mindestens ein Bremsmittel (10) zum Abbremsen mindestens eines dieser Rollmittel (9) und Steuermittel (11) zum Steuern mindestens eines solchen Bremsmittels (10) umfasst.

13. Abnehmbare Transportvorrichtung (1) nach einem der vorhergehenden Ansprüche, **dadurch gekennzeichnet, dass** die Transportvorrichtung (1) mindestens eine Aufnahme (12) umfasst, die sich im Inneren der Transportvorrichtung (1) hinter einer der Seitenwände (4; 4') erstreckt und durch eine Öffnung (43) zugänglich ist, die eine solche Seitenwand (4; 4') umfasst.

14. Abnehmbare Transportvorrichtung (1) nach Anspruch 12 und 13, **dadurch gekennzeichnet, dass** mindestens ein Teil der Steuermittel (11) des mindestens einen Bremsmittels (10) innerhalb der Aufnahme (12) oder einer der Aufnahmen (12) angeordnet ist.

15. Abnehmbare Transportvorrichtung (1) nach Anspruch 13, **dadurch gekennzeichnet, dass** die Transportvorrichtung (1) mindestens einen Dokumentenhalter (13) umfasst, der innerhalb der Aufnahme (12) oder einer der Aufnahmen (12) angeordnet ist.

## Claims

1. Dismantlable device (1) for transporting material, comprising a lower wall (2) which has a lower frame (20), a lower plate (21), and releasable securing means (22) for releasably securing said lower frame (20) to said lower plate (21), said device also comprising an upper wall (3) which has an upper frame (30), an upper plate (31), and releasable securing means (32) for releasably securing said upper frame (30) to said upper plate (31), said device also comprising lateral walls (4; 4') which each have a lateral frame (40; 40'), a lateral plate (41; 41'), and releasable securing means (42; 42') for releasably securing such a lateral frame (40; 40') to such a lateral plate (41; 41'), said device also comprising longitudinal walls (5; 5') which each have a longitudinal frame (50; 50') and of which at least one comprises at least one sectional door (6; 6A) that is movable between a closed position and an open position of the transport device (1), **characterized in that** the releasable securing means (22; 32; 42, 42') comprise at least one through-opening (8) belonging to the lower (20), upper (30), or lateral (40; 40') frame, as applicable, said securing means comprise least one threaded insert (80) belonging to the lower (21), upper (31), or lateral (41; 41') plate, as applicable, and said securing means comprise at least one screw (81) which passes through such a through-opening (8) and which interacts with such a threaded insert (80).

2. Dismantlable transport device (1) according to claim 1, **characterized in that** the lower frame (20) and/or the upper frame (30) and/or the lateral frames (40; 40') and/or the longitudinal frames (50; 50') each comprise a plurality of profiles (7).

3. Dismantlable transport device (1) according to claim 2, **characterized in that** at least part of the profiles (7) of such a frame (20; 30; 40, 40'; 50, 50') is in the form of an angle and comprises a first wing (70), which is in contact with the face of a first plate (P), a first stop (71), which is in contact with the end face of the first plate (P), a second wing (70'), which is in contact with the face of a second plate (P'), and a second stop (71'), which is in contact with the end face of the second plate (P').

4. Dismantlable transport device (1) according to claim 3, **characterized in that** the first wing (70) and/or the second wing (70'), which belong to the profile or profiles (7) which belong to said frame (20; 30; 40, 40'; 50, 50'), comprise said at least one through-opening (8).

5. Dismantlable transport device (1) according to claim 3, **characterized in that**, in the profile or profiles (7), the first wing (70) extends along a first plane while the second wing (70') extends from the first wing (70) and along a second plane that is perpendicular to the first plane, and the profile or profiles (7) each comprise at least one rib (72) which extends from the first wing (70) and/or from the second wing (70') and which comprises the first stop (71) and/or the second stop (71').

6. Dismantlable transport device (1) according to claim 5, **characterized in that** said at least one rib (72) comprises a proximal portion (720) which extends from the first wing (70) and/or from the second wing (70'), and two distal portions (721; 721') which extend from the proximal portion (720) so as to diverge and which each comprise a free end, one of which free ends comprises the first stop (71) and the other of which free ends comprises the second stop (71').

7. Dismantlable transport device (1) according to any of the preceding claims, **characterized in that** the sectional door or doors (6; 6A) each comprise an internal portion (60; 60A), which is positioned inside the transport device (1) and movable inside said transport device (1), an intermediate portion (61; 61A), which is movable between an unfolded position outside the transport device (1), in which unfolded position said intermediate portion (61; 61A) forms a non-zero angle with the internal portion (60; 60A), and a folded position inside the transport device (1), in which folded position at least part of said intermediate portion (61; 61A) is folded down on top of or underneath at least part of the internal portion (60; 60A), and intermediate hinge means (62; 62A) for hinging the intermediate portion (61; 61A) with respect to the inner portion (60; 60A).

8. Dismantlable transport device (1) according to claim 7, **characterized in that** the transport device (1) comprises means for slidably mounting the internal portion (60; 60A) of the sectional door (6) or of the sectional doors (6; 6A) inside the transport device (1).

9. Dismantlable transport device (1) according to claim 8, **characterized in that** the slidablemounting means comprise, on either side of the internal portion (60; 60A), a guide slide, specifically one which is made of a polymer material, inside which guide slide one of the lateral edges (602) of the internal portion (60; 60A) is slidably mounted.

10. Dismantlable transport device (1) according to claim 7, **characterized in that** the intermediate hinge means (62; 62A) comprise a first part, which is secured to an end edge (603) of the internal portion (60; 60A) of the sectional door (6; 6A), and a second part, which is secured to the intermediate portion (61; 61A) and which is set back from a free end of said intermediate portion (61; 61A).

11. Dismantlable transport device (1) according to any of claims 7 to 10, **characterized in that** the sectional door or doors (6; 6A) each also comprise a distal portion (63; 63A), which is movable between an unfolded position outside the transport device (1), in which unfolded position said distal portion (63; 63A) extends along the same plane as the intermediate portion (61; 61A), and a folded position inside the transport device (1), in which folded position said distal portion (63; 63') is folded down on top of or underneath said intermediate portion (61; 61A), and distal hinge means (64; 64') for hinging the distal portion (63; 63') with respect to the intermediate portion (61; 61').

12. Dismantlable transport device (1) according to any of the preceding claims, **characterized in that** the transport device (1) comprises a plurality of rolling means (9), at least one braking means (10) for braking at least one of these rolling means (9), and control means (11) for controlling at least one such braking means (10).

13. Dismantlable transport device (1) according to any of the preceding claims, **characterized in that** the transport device (1) comprises at least one housing (12) that extends inside the transport device (1) behind one of the lateral walls (4; 4') and is accessible through an opening (43) belonging to such a lateral wall (4; 4').

14. Dismantlable transport device (1) according to claims 12 and 13, **characterized in that** at least part of the control means (11) of said at least one braking means (10) is located inside the housing (12) or one of the housings (12).

15. Dismantlable transport device (1) according to claim 13, **characterized in that** the transport device (1) comprises at least one document holder (13) located inside the housing (12) or one of the housings (12).
